# FASCICULE DE BREVET EUROPEEN

(11) **EP 0 359 634 B1**
(45) Date de publication et mention de la délivrance du brevet: **03.03.1993**
(21) Numéro de dépôt: 89402449.6
(22) Date de dépôt: 07.09.1989
(51) Int. Cl.: G02B 23/12

(54) **Episcope de conduite et d'observation jour et nuit pour véhicule blindé**
Periskop zum Tag- und Nachtbetrieb für Panzerfahrzeuge
Driving episcope with night and day observation for armoured vehicles

(30) Priorité: 13.09.1988 FR 8811934
(43) Date de publication de la demande: 21.03.1990
(73) Titulaire: SOPELEM-SOFRETEC, F-95872 BEZONS CEDEX (FR)
(72) Inventeur: Demortier, Laurent, F-75015 Paris (FR)
(74) Mandataire: Phélip, Bruno

(56) Documents cités:
- EP-A- 0 193 236
- DE-A- 1 772 861
- DE-B- 1 106 516
- FR-A- 1 523 069
- NAVY TECHNICAL DISCLOSURE BULLETIN, vol. 3, no. 7, juillet 1978, pages 1-4; R. W. PIERCE: "Multi-spectral imaging system"
- TOUTE L'ELECTRONIQUE, no. 478, novembre 1982, page 10, Paris,FR; "Imagerie à bas niveau de lumière par CCD"

## Description

La présente invention concerne un épiscope de conduite et d'observation jour et nuit pour véhicule blindé.

L'invention vise en particulier un épiscope destiné à la conduite d'un char de combat.

Un épiscope du type précité est décrit dans le document FR-A-2578063. La caractéristique essentielle de cet épiscope réside dans le fait que les voies de jour et de nuit qu'il décrit sont des voies purement optiques, à l'exception d'un dispositif intensificateur de lumière incorporé sur la voie de nuit.

Le DE-A-1772861 (LICENTIA) décrit un dispositif de visée et d'observation sensible à un rayonnement thermique, qui incorpore deux systèmes d'observation électro-optiques mais n'enseigne pas un épiscope comprenant les caractéristiques de l'invention, en particulier des moyens électroniques pour analyser traiter et mettre en forme un signal électrique issu d'un capteur d'images à convertisseur photonique de l'épiscope.

Egalement encore, l'article "Navy Technical Disclosure" Bulletin Vol. 3 N° 7, Juillet 1978, pages 1 à 4, fait état d'un dispositif à trois voies optroniques vidéo et comportant un objectif focalisant une image sur un détecteur la transformant en signal électrique traité et mis en forme par des moyens électroniques avant de parvenir à des moyens de visualisation. Ce dispositif fonctionne en temps réel pour réaliser des visualisations trichromes. Il comporte également une voie à détecteur infrarouge lointain.

Un but de la présente invention est de proposer un épiscope de conduite et d'observation jour et nuit pour véhicule blindé qui permet la conduite sous n'importe quel niveau de luminosité, quelles que soient les conditions d'environnement, et qui permet également de poursuivre la conduite en cas de dégradation des voies vidéo.

Un autre but de l'invention est de proposer un épiscope du type précité qui soit de coût relativement réduit par rapport à un dispositif ne comprenant que des moyens optiques de prise de vues et de visualisation et de conception évolutive.

Un autre but encore de l'invention est de proposer un épiscope de conduite jour et nuit qui permette de "transporter" les images captées et de visualiser diverses informations en surimpression.

Ainsi, l'épiscope conforme à l'invention comporte au moins deux voies optroniques vidéo du type comprenant un objectif focalisant une image incidente sur un capteur d'images à convertisseur photonique conçu pour transformer l'image précitée en un signal électrique, l'épiscope comprenant en outre des moyens électroniques pour analyser, traiter et mettre en forme le signal électrique précité qui est destiné à des moyens de visualisation, lesdites voies optroniques étant des voies, l'une de nuit, l'autre de jour, ledit épiscope étant caractérisé en ce qu'il comporte également une voie de jour optique de secours.

Avantageusement, la position d'utilisation de la voie optique de secours est décalée angulairement par rapport à la position d'utilisation des voies vidéo.

Ainsi, en cas de dégradation des voies vidéo, l'opérateur de conduite peut utiliser la voie de jour de secours par simple rotation de l'épiscope, par exemple une rotation de 190°.

L'utilisation d'un signal vidéo, c'est-à-dire la transformation d'une information lumineuse en un signal électrique, permet de visualiser à la fois l'image des voies vidéo et celle des autres capteurs de visualisation du véhicule blindé tel que la lunette du chef de véhicule ou la caméra de recul du véhicule. Des moyens électroniques adaptés pourront permettre en outre la visualisation d'informations en surimpression, par exemple une symbolisation.

Selon une caractéristique avantageuse de l'invention, un des capteurs d'images a convertisseur photonique est un dispositif à transfert de charges.

Les moyens de visualisation comprennent un micromoniteur de visualisation interne à l'épiscope et auquel les capteurs d'images des voies vidéo sont reliés. De préférence, l'épiscope comprend un bioculaire d'observation de l'écran du micromoniteur.

Ainsi, l'image correspondant au signal électronique généré par le capteur d'images est reproduite sur l'écran du micromoniteur et observée à travers le bioculaire. L'observation de l'écran de visualisation du micromoniteur à travers un bioculaire assure un confort de visualisation optimal par observation d'une image renvoyée à l'infini.

Selon une autre caractéristique avantageuse de l'invention, l'une des voies vidéo comprend un tube intensificateur de lumière interposé entre l'objectif et le capteur d'images de cette voie vidéo.

La fonction du tube intensificateur de lumière est de relever le niveau lumineux de la scène observée afin que le signal reçu par le capteur d'images soit supérieur à son seuil de sensibilité et à son bruit temporel.

De préférence, lorsque le capteur d'images est un dispositif à transfert de charges, le tube intensificateur est relié à ce dispositif à transfert de charges par l'intermédiaire d'un faisceau de fibres optiques.

Un tel couplage offre le meilleur compromis entre le prix, la compacité et la portée de détection à tout niveau de lumière.

Selon une variante de réalisation de l'invention, le capteur d'images de l'une des voies vidéo est un capteur infrarouge. Les avantages d'un tel capteur par rapport à un module infrarouge classique consiste dans la réduction d'encombrement, l'inutilité de développer une électronique spécifique pour les détecteurs du dispositif à transfert de charges et la suppression des systèmes de balayage.

Selon une autre caractéristique préférentielle de l'invention, l'objectif, le tube intensificateur de lumière s'il existe et le capteur d'images de chacune des voies vidéo est monté sur une platine pivotante. En outre, de préférence encore, les moyens électroniques de traitement des capteurs d'images comprennent des moyens intégrateurs d'oscillations. Une telle combinaison de moyens permet d'élargir considérablement le champ de vision de l'épiscope.

D'autres caractéristiques et avantages de l'invention ressortiront encore de la description qui va suivre.

Aux dessins annexés donnés à titre d'exemples non limitatifs:
La fig. 1 est une vue en perspective d'un épiscope conforme à l'invention montrant en particulier les objectifs des voies vidéo et le bioculaire d'observation de la voie de jour de secours;
La fig. 2 est une vue en perspective de l'épiscope de la figure 1 après rotation de 180° autour de son axe montrant en particulier le prisme d'entrée de la voie de jour de secours et le bioculaire d'observation des voies vidéo;
Les figs. 3A et 3B sont des vues en coupe de l'épiscope des figures 1 et 2 selon des plans parallèles passant par les axes optiques des voies vidéo;
La fig. 4 est une vue en coupe selon le plan IV-IV de la figure 3 A;
La fig. 5 est une vue en coupe de l'épiscope des figures 1 à 4 limitée à la voie de jour de secours, et
La fig. 6 est une vue en coupe d'un épiscope conforme à l'invention selon une variante de réalisation dans laquelle les axes optiques de voies vidéo s'étendent dans un même plan.

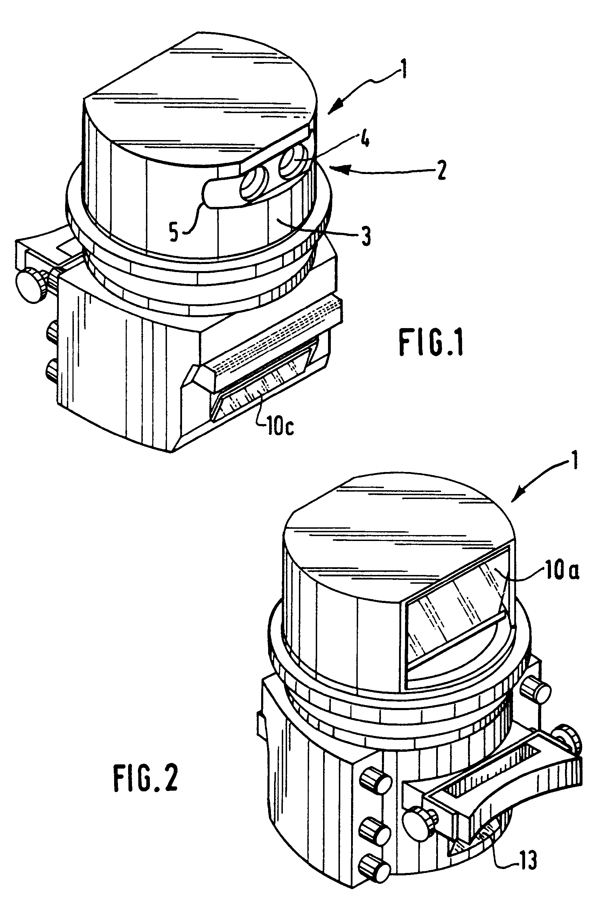

L'épiscope de conduite et d'observation jour et nuit 1 pour véhicule blindé représenté aux figures 1 à 5 comprend essentiellement deux voies vidéo 2, 3 dont les axes optiques s'étendent dans deux plans parallèles. Plus explicitement, les deux voies vidéo précitées comprennent une voie dit de nuit 2, c'est-à-dire utilisable plus spécifiquement la nuit et une voie dite de jour 3, c'est-à-dire utilisable plus spécifiquement le jour. Toutefois, comme on le décrira plus loin, la voie de nuit peut être utilisée le jour, par exemple en cas de conduite par temps de brouillard, tandis que la voie de jour peut être utilisée la nuit, par exemple en cas de suréclairement dû à des explosions ou analogues.

Conformément à l'invention, et ainsi qu'on le décrira plus loin, les voies de nuit et de jour 2, 3 précitées sont des voies optroniques vidéo du type comportant un objectif 4 respectivement 5 focalisant l'image lumineuse incidente sur un capteur d'images à convertisseur photonique tel qu'un dispositif à transfert de charges ou un tube cathodique 6 respectivement 7 conçu pour transformer l'image précitée en un signal électrique, l'épiscope 1 comprenant en outre des moyens électroniques 8 pour analyser, traiter et mettre en forme le signal électrique précité qui est destiné à des moyens de visualisation 9 qui, dans l'exemple, sont comme les moyens électroniques 8 précités communs à la voie de nuit 2 et à la voie de jour 3. Par ailleurs, l'épiscope 1 comprend une voie de jour optique 10 de secours dont la position d'utilisation est décalée angulairement de 180° par rapport à la position d'utilisation des voies vidéo 2 et 3 précitées.

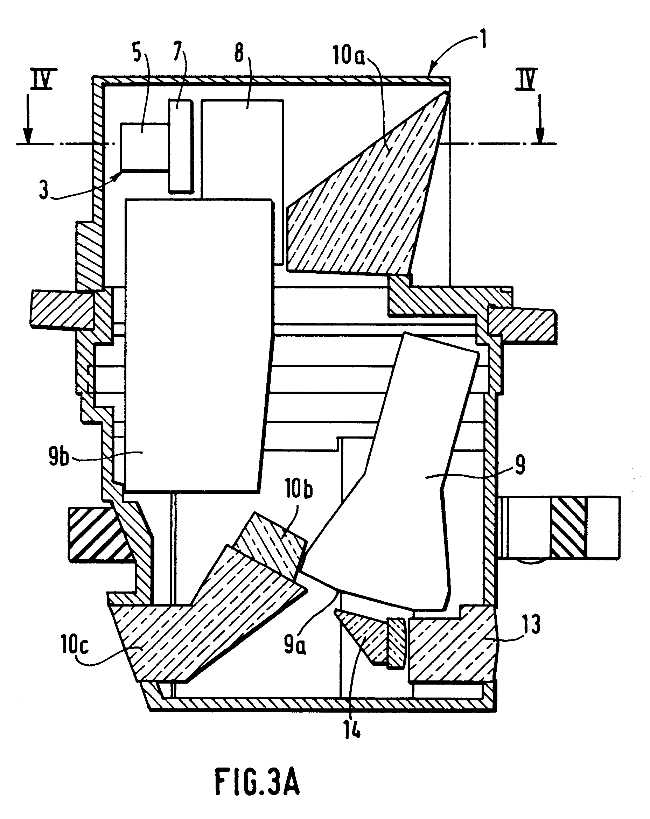

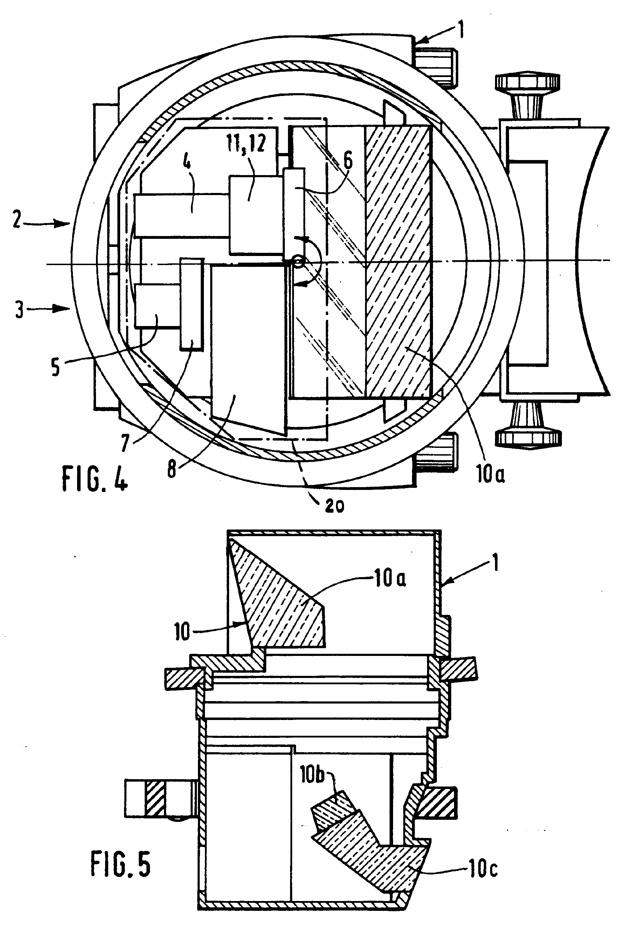

Comme on le voit plus particulièrement aux figures 3A et 5, la voie de jour de secours 10, de conception particulièrement simple, comprend essentiellement un prisme d'entrée 10a situé en partie haute de l'épiscope 1, à surface réfléchissante vers une tare de sortie 10b à surface réfléchissante vers un bioculaire d'observation 10c situé en partie basse de l'épiscope. Ainsi, en cas de dégradation des voies vidéo 2 et 3, l'opérateur de conduite du véhicule blindé peut utiliser la voie de jour optique 10 grâce à une simple rotation de 180° de l'épiscope 1. A cet effet, l'épiscope 1 est par exemple monté à pivotement par rapport à une embase fixe (non représentée) solidaire du véhicule.

Les dispositifs à transfert de charges 6 et 7, ou matrices DTC, sont des éléments de prise de vues qui permettent d'optimiser les performances de l'épiscope 1 conforme à l'invention. Ces dispositifs bénéficient, en outre des avantages déjà cités, des progrès constants de la technologie des semi-conducteurs. Actuellement, les fabricants de matrices tendent à diminuer la taille des pixels de ces matrices tout en augmentant considérablement leur nombre par matrice. Ceci permet en particulier d'accroître la FTM (fonction de transfert de modulation), c'est-à-dire le contraste reçu par l'oeil de l'observateur en fonction du contraste de la cible, et la fréquence de coupure de ces matrices, appelée fréquence de Nyquist, et par conséquent d'augmenter de façon non négligeable la résolution et la portée des voies vidéo 2 et 3. On tend également à diminuer le bruit des matrices DTC ce qui a pour conséquence d'abaisser l'éclairement minimum d'utilisation de la voie de nuit.

Comme matrice DTC, on pourra utiliser la matrice TH 7864 fabriquée par la Société THOMSON CSF. C'est une matrice photosensible à haute résolution qui bénéficie bien sur des technologies déjà utilisées pour les autres matrices DTC de la Société THOMSON CSF, c'est-à-dire qu'elle est réalisée en technologie N-MOS à canal enterré, assurant un faible bruit et une efficacité de transfert maximum. De plus, cette matrice est équipée d'un dispositif anti-éblouissement. La matrice de type TH 7864 est un capteur à transfert de trame constitué d'un zone image pour l'intégration des charges et d'une zone mémoire pour le stockage de ces dernières. Cette organisation a l'avantage de procurer un effet de moirage très réduit en procurant une zone image presque totalement photosensible et la possibilité d'utiliser des temps d'intégration et de lecture différents.

D'autres matrices DTC de technologie similaire peuvent bien entendu être utilisées. On citera à titre d'exemples les matrices fabriquées par les Sociétés SONY, TOSHIBA ou HONEYWELL.

Par ailleurs, comme tube cathodique, on pourra par exemple utiliser un tube de type VIDICON (marque déposée).

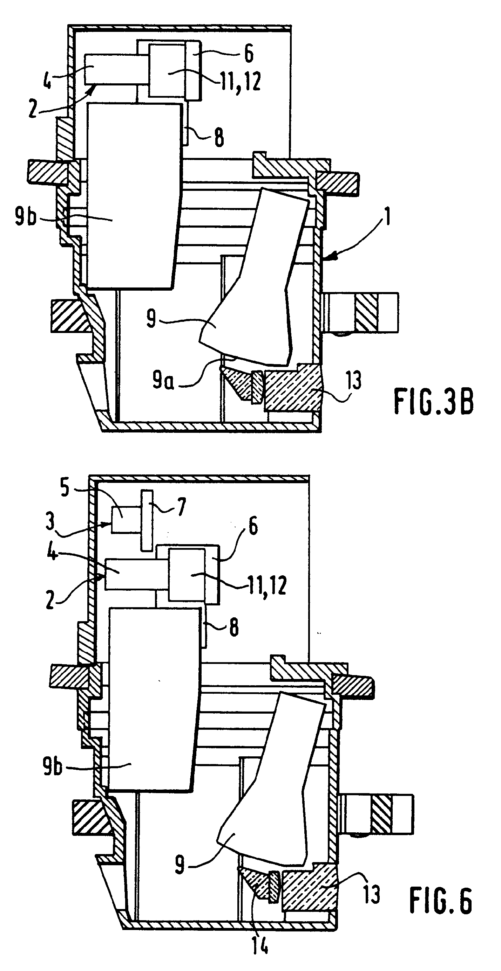

Selon une caractéristique avantageuse de l'invention, les capteurs d'images 6 et 7 des voies de jour 3 et de nuit 2 sont reliés à un micromoniteur de visualisation 9 interne à l'épiscope 1. Ce micromoniteur 9, qui est disposé en position sensiblement verticale à l'intérieur de l'épiscope 1 (voir figure 3), est un micromoniteur haute résolution tel que celui de type TH 8121 développé par la Société THOMSON CSF. Un bioculaire d'observation 13, situé en partie basse de l'épiscope 1, est prévu pour observer l'écran 9a du micromoniteur 9 par l'intermédiaire d'un prisme réfléchissant 14 (voir figure 3A). L'observation de l'écran 9a du micromoniteur 9 à travers le bioculaire 13 assure un confort de visualisation optimal par projection à l'infini de l'image visualisée sur l'écran 9a.

A la différence de la voie de jour 3 qui ne comprend qu'un objectif associé à un capteur d'images (matrice DTC ou tube VIDICON), la voie de nuit 2 comprend un tube intensificateur de lumière 11 (permettant la vision de nuit) interposé entre l'objectif 4 de la voie de nuit 2 et le capteur d'images 6 de cette voie de nuit. Le rôle du tube intensificateur de lumière 11 ou dispositif 11L, connu en lui-même et non spécifique à l'invention, est de relever le niveau lumineux de la scène observée afin que le signal reçu par le capteur d'images 6 associé soit supérieur à son seuil de sensibilité. Selon une caractéristique préférentielle de l'invention, le tube intensificateur de lumière 11 précité est relié au dispositif à transfert de charges 6 de la voie de nuit au moyen d'un faisceau de fibres optiques 12. Une pré-étude détaillée conduite par le déposant a permis d'établir qu'un tube intensificateur de lumière de deuxième génération couplé au dispositif à transfert de charges correspondant par faisceau de fibres optiques offrait le meilleur compromis entre le prix, la compacité et la portée de détection à tout niveau de lumière. En particulier, le déposant a démontré qu'un tube couplé par optique classique n'était pas utilisable à très bas niveau de lumière.

Comme tube intensificateur de lumière, on pourra par exemple utiliser un tube de deuxième ou troisième génération de diamètre de photocathode de 18 mm selon la norme 1000 MIL-I-49052 D tel que le tube RTC XX 1610.

Selon une variante de réalisation de l'invention, il est possible de remplacer le module constitué par le tube intensificateur de lumière 11 couplé à la matrice DTC 6 par un capteur d'images infrarouge tel qu'une matrice IR DTC. Il s'agit par exemple d'un dispositif hybride constitué de détecteurs photovoltaïques en HgCdTe tel que le dispositif IR DTC conçu par la Société SOFRADIR, lesdits détecteurs étant connectés par des billes d'indium aux pixels d'une matrice DTC. Les avantages d'un tel dispositif par rapport à un module infrarouge classique sont considérables. On citera à titre d'exemples la réduction d'encombrement, la non nécessité de développer une électronique spécifique pour les détecteurs et la suppression des systèmes de balayage.

De même, le module constitué par le tube intensificateur de lumière 11 couplé au tube cathodique peut être remplacé par un tube infrarouge, par exemple de type PYRICON (marque déposée).

A un instant donné, une seule voie vidéo 2 ou 3 est en service, le passage d'un voie à l'autre étant obtenu à la demande de l'observateur par commutation manuelle, des moyens de commutation (non représentés) étant prévus à cet effet. Par ailleurs, les moyens électroniques de traitement 8 des capteurs d'images 6, 7 des voies vidéo jour et nuit sont conçus, de manière connue en elle-même, pour assurer un basculement automatique en position de service de la voie de nuit 2 à la voie de jour 3 en cas de saturation de la voie de nuit. Une telle saturation peut par exemple intervenir lors de l'observation par l'épiscope 1 de l'explosion d'un engin incendiaire ou analogue. A cet effet, les moyens électroniques 8 précités comprennent un détecteur de saturation (non représenté) auquel est asservi le basculement de la voie de nuit à la voie de jour.

La voie de nuit 2 pourra également être utilisée de jour. A cet effet, l'objectif 4 de la voie de nuit 2 comprend un dispositif atténuateur connu en lui-même qui est constitué d'un diaphragme à fermeture automatique en cas de suréclairement et associé à une pastille ou densité de verre destinée à absorber les photons. Ce dispositif atténuateur permet l'utilisation de la voie de nuit 2 le jour en cas de manoeuvre accidentelle ou d'indisponibilité de la voie de jour 3. Parallèlement la voie de jour 3 pourra être utilisée de nuit si les conditions d'environnement le justifient (fumée, brouillard).

Selon une autre autre caractéristique avantageuse de l'invention, les objectifs 4 et 5 et les capteurs d'images 6 et 7 ainsi que le tube intensificateur de lumière 11 associé sont montés sur une platine oscillante 20 (voir figure 4) par exemple de plus ou moins 20° par rapport à la position de repos, qui permet d'élargir le champ de vision du conducteur. De préférence, des moyens intégrateurs d'oscillations connus en eux-mêmes, incorporés dans les moyens électroniques de traitement 8 associés aux capteurs d'images 6 et 7, permettent de reconstituer une image de champ large à chaque instant.

Les divers composants de l'épiscope 1 décrit ont été choisis en particulier de manière que la durée de vie de cet épiscope soit importante, que son prix soit adapté à la fonction remplie, qu'il soit de conception compacte et évolutive, c'est-à-dire bénéficie des progrès technologiques en cours (en particulier utilisation de matrices IRDTC, mise en oeuvre du traitement d'images), et également que l'on puisse transporter l'image générée par les capteurs d'images 6 et 7 grâce à l'utilisation d'un signal vidéo né de la transformation d'une information lumineuse en un signal électrique. A cet effet, le micromoniteur 9 comprend des moyens électroniques de commande 9b (voir figure 3) adaptés à retransmettre les images captées par l'épiscope 1 vers différents postes d'observation du véhicule blindé (console du chef de char et du tireur) et à afficher, en surimpression sur l'image visualisée par le micromoniteur 9, des informations diverses telles que par exemple une symbolisation ou des ordres émanant du chef de char. Ainsi, grâce à l'utilisation des capteurs d'images à convertisseur photonique et du micromoniteur, il est possible d'intégrer l'épiscope 1 au sein d'une régie vidéo interne au véhicule blindé qui exploiterait les différences informations obtenues à partir des divers capteurs du véhicule blindé (poste du chef de char, caméra anti-recul, poste du tireur etc..). Comme on le voit à la figure 3, les moyens de commande 9b du micromoniteur 9 sont disposés à cheval entre les parties haute et basse de l'épiscope 1 qui est par ailleurs de forme généralement cylindrique.

Bien entendu l'invention n'est pas limitée aux exemples décrits et représentés.

Il serait ainsi possible d'utiliser comme capteur d'images pour la voie de jour un capteur couleur à condition bien entendu d'utiliser un moniteur couleur. Ce capteur couleur est par exemple une matrice DTC couleur ou l'association de trois matrices DTC monochromes dont les signaux sont traités dans un prisme séparateur.

Par ailleurs, l'épiscope 1 pourrait être relié à des moyens de visualisation extérieurs permettant la visualisation simultanée des images captées par les voies vidéo 2 et 3 ou une conduite à deux, ou constituant encore des moyens de visualisation de secours en cas de panne du micromoniteur 9.

En outre, les voies vidéo 2 et 3 pourraient être superposées de manière que leurs axes optiques s'étendent dans un même plan tel que l'illustre la figure 6. Cette disposition faciliterait en particulier le montage sur platine pivotante décrit plus haut.

Selon encore une autre variante de réalisation, il est possible, en vue de procurer un dispositif modulaire et évolutif, de concevoir l'épiscope en deux parties ou "modules" dissociables ou détachables. On pourrait ainsi avoir une partie haute comprenant les voies vidéo jour et nuit et la voie "jour" de secours, et une partie basse comprenant le module de visualisation, c'est-à-dire l'écran CRT et le bioculaire. Alternativement, la partie haute pourrait ne pas comprendre la voie "jour" de secours tandis que le bioculaire pourrait être absent du module de visualisation, celle-ci étant réalisée par le CRT seul.

Les signes de référence insérés après les caractéristiques techniques mentionnées dans les revendications, ont pour seul but de faciliter la compréhension de ces dernières, et n'en limitent aucunement la portée.

## Revendications

1. Episcope de conduite et d'observation jour et nuit pour véhicule blindé comportant au moins deux voies optroniques vidéo du type comprenant un objectif (4, 5) focalisant une image incidente sur un capteur d'images à convertisseur photonique (6, 7) conçu pour transformer l'image précitée en un signal électrique, l'épiscope comprenant en outre des moyens électroniques pour analyser, traiter et mettre en forme le signal électrique précité qui est destiné à des moyens de visualisation (9), lesdites voies optroniques étant des voies, l'une de nuit, l'autre de jour, ledit épiscope étant caractérisé en ce qu'il comporte également une voie de jour optique de secours.

2. Episcope selon la revendication 1, caractérisé en ce que la position de l'utilisation de la voie de jour optique de secours (10) est décalée angulairement par rapport à la position d'utilisation des voies vidéo (2, 3) précitées.

3. Episcope selon l'une quelconque des revendications précédentes, caractérisé en ce qu'un des capteurs d'images (6, 7) est un dispositif à transfert de charge (4).

4. Episcope conforme à l'une des revendications 1 à 3, caractérisé en ce que les moyens de visualisation (9) sont communs (20) aux deux voies vidéo (2, 3).

5. Episcope selon l'une quelconque des revendications précédentes, caractérisé en ce que les moyens de visualisation comprennent un micromoniteur (9) de visualisation interne à l'épiscope (1) et auquel les capteurs d'images (6, 7) des voies vidéo (2, 3) sont reliés.

6. Episcope conforme à la revendication 5, caractérisé en ce qu'il comprend un bioculaire d'observation de l'écran (9a) d'un micromoniteur.

7. Episcope conforme à l'une des revendications précédentes, caractérisé en ce que l'une (2) des voies vidéo comprend un tube intensificateur de lumière (11) interposé entre l'objectif (4) et le capteur d'images (6) correspondants.

8. Episcope conforme à la revendication 7, dans lequel un des capteurs d'images est un dispositif à transfert de charges, caractérisé en ce que le tube intensificateur (11) de la voie de nuit (2) est relié au dispositif à transfert de charges (6) correspondant par l'intermédiaire d'un faisceau de fibres optiques (12).

9. Episcope conforme à l'une des revendications précédentes, caractérisé en ce que le capteur d'images (6) de l'une (2) des voies vidéo est un capteur infrarouge.

10. Episcope conforme à l'une des revendications précédentes, caractérisé en ce que le capteur d'images (7) de l'une (3) des voies est un capteur couleur.

11. Episcope conforme à l'une des revendications précédentes, caractérisé en ce qu'à un instant donné, une seule voie vidéo (2, 3) est en service, le passage d'une voie à l'autre étant obtenu par commutation manuelle.

12. Episcope conforme à l'une des revendications précédentes, caractérisé en ce que les moyens électroniques de traitement (8) des capteurs d'images (6, 7) sont conçus pour assurer un basculement automatique en position de service de la voie de nuit (2) à la voie de jour (3) en cas de saturation de la voie de nuit (2).

13. Episcope conforme à l'une des revendications 8 à 13, caractérisé en ce que les objectifs (4, 5), les capteurs d'images (6, 7) et le tube intensificateur de lumière (11) sont montés sur une platine oscillante (20).

14. Episcope conforme à l'une des revendications précédentes, caractérisé en ce que les moyens électroniques de traitement (8) des capteurs d'images (6, 7) comprennent des moyens intégrateurs d'oscillations.

15. Episcope conforme à l'une des revendications précédentes, caractérisé en ce que la voie de jour de secours (10) comprend un prisme d'entrée (10a) à surface réfléchissante vers une tare de sortie (10b) à surface réfléchissante vers un bioculaire d'observation (10c).

16. Episcope selon la revendication 5 prise seule ou en combinaison avec l'une des revendications précédentes, caractérisé en ce que le micromoniteur (9) comprend des moyens électroniques de commande (9b) adaptés à retransmettre les images captées par l'épiscope (1) vers différents postes d'observations du véhicule blindé et à afficher des informations en surimpression sur l'écran (9a) du micromoniteur (9).

17. Episcope selon la revendication 7 prise seule ou en combinaison avec l'une des revendications précédentes, caractérisé en ce qu'il présente une forme généralement cylindrique et comprend en partie haute les objectifs (4, 5) des voies vidéo (2, 3), les capteurs d'images (6, 7) et les moyens électroniques de traitement associés (8), le tube intensificateur de lumière (11) et le prisme d'entrée (10a) de la voie de jour de secours, et en partie basse les bioculaires (10c) des voies vidéo et de secours, la tare de sortie (10b) de la voie de secours (3) et le micromoniteur (9) disposé en position sensiblement verticale, tandis que les moyens électroniques de commande (9b) du micromoniteur sont disposés à cheval entre les parties haute et basse de l'épiscope (1).

18. Episcope conforme à l'une des revendications précédentes, caractérisé en ce que les axes optiques des voies vidéo (2,3) s'étendent dans un même plan.

19. Episcope conforme à l'une des revendications 1 à 17, caractérisé en ce que les axes optiques des voies vidéo (2, 3) s'étendent dans deux plans parallèles.

20. Episcope selon l'une des revendications précédentes, caractérisé en ce qu'il comprend deux modules dissociables, l'un comportant au moins les voies optroniques vidéo (2, 3) et les moyens électroniques associés (8) tandis que l'autre constitue un module de visualisation comprenant les moyens de visualisation optronique (9).

## Patentansprüche

1. Periskop zum Tag- und Nachtbetrieb für ein Panzerfahrzeug mit wenigstens zwei optronischen(optisch-elektronischen) Videokanälen, ferner mit einem Objektiv (4,5), das ein einfallendes Bild auf einen Bildempfänger (6,7) mit einem Fotonenwandler fokussiert, der das Bild in ein elektrisches Signal umwandelt, mit elektronischen Mitteln zum Analysieren, Behandeln und Umformen des elektrischen Signals, das für Mittel (9) zum Sichtbarmachen bestimmt ist, wobei von den optronischen Kanälen der eine für den Tagbetrieb und der andere für den Nachtbetrieb ausgebildet ist,
**dadurch gekennzeinchnet,**
daß zusätzlich ein optischer Sicherheitskanal für den Tagbetrieb vorgesehen ist.

2. Periskop nach Anspruch 1,
**dadurch gekennzeichnet**,
daß die Gebrauchslage des optischen Sicherheitskanals (10) für den Tagbetrieb, bezogen auf die Gebrauchslage der Videokanäle (2,3), winkelig verschoben ist.

3. Periskop nach einem der vorhergehenden Ansprüche,
**dadurch gekennzeichnet**,
daß einer der Bildempfänger (6,7) als Vorrichtung mit Ladungsübertragung (4) ausgebildet ist.

4. Periskop nach einem der Ansprüche 1 bis 3,
**dadurch gekennzeichnet**,
daß die Mittel (9) zum Sichtbarmachen mit den beiden Videokanälen (2,3) gemeinsam sind.

5. Periskop nach einem der vorhergehenden Ansprüche,
**dadurch gekennzeichnet**,
daß die Mittel zur Sichtbarmachung einen Mikromonitor (9) zur internen Sichtbarmachung für das Periskop (1) aufweisen, an das Bildempfänger (6,7) für die Videokanäle angeschlossen sind.

6. Periskop nach Anspruch 5,
**dadurch gekennzeichnet,**
daß es ein Binokular zur Beobachung des Bildschirms (9a) eines Mikromonitors aufweist.

7. Periskop nach einem der vorhergehenden Ansprüche,
**dadurch gekennzeichnet,**
daß einer der Videokanäle (2) eine Lichtverstärkerröhre (11) aufweist, die zwischen dem betreffenden Objektiv (4) und dem betreffenden Bildempfänger (6) angeordnet ist.

8. Periskop nach Anspruch 7, bei dem einer der Bildempfänger eine Vorrichtung mit Ladungsübertragung ist,
**dadurch gekennzeichnet,**
daß die Verstärkerröhre (11) für den Kanal (2) zum Nachtbetrieb mit einer entsprechenden Vorrichtung zur Ladungsübertragung (6) verbunden ist, und zwar über ein optisches Faserbündel (12).

9. Periskop nach einem der vorhergehenden Ansprüche
**dadurch gekennzeichnet,**
daß der Bildempfänger (6) einer der Videokanäle (2) ein Infrarotempfänger ist.

10. Periskop nach einem der vorhergehenden Ansprüche,
**dadurch gekennzeichnet,**
daß der Bildempfänger (7) des einen der Kanäle (3) ein Farbempfänger ist.

11. Periskop nach einem der vorhergehenden Ansprüche,
**dadurch gekennzeichnet,**
daß in einem bestimmten Augenblick ein einziger Videokanal (2,3) eingeschaltet ist, wobei der Wechsel von einem Kanal zum anderen von Hand erfolgt.

12. Periskop nach einem der vorhergehenden Ansprüche,
**dadurch gekennzeichnet,**
daß die elektronischen Behandlungsmittel (8) der Bildempfänger (6,7) derart ausgebildet sind, daß automatisch der Kanal (2) zum Nachtbetrieb auf den Kanal (3) für den Tagbetrieb umgeschaltet wird, wenn der Kanal für den Nachtbetrieb (2) gesättigt ist.

13. Periskop nach einem der Ansprüche 8 bis 13,
**dadurch gekennzeichnet**,
daß die Objektive (4,5) der Bildempfänger (6,7) und die Lichtverstärkerröhre (11) auf eine oszillierenden Platine (20) befestigt sind.

14. Periskop nach einem der vorhergehenden Ansprüche,
**dadurch gekennzeichnet**,
daß die elektronischen Mittel (8) für die Behandlung der Bildempfänger (6,7) Integrationsmittel für Schwingungen aufweisen.

15. Periskop nach einem der vorhergehenden Ansprüche,
**dadurch gekennzeichnet,**
daß der Sicherheitskanal (10) für den Tagbetrieb ein Eintrittsprisma (10a) mit reflektierender Oberfläche zu einem Ausgang (10b) mit reflektierender Oberfläche zu einem Beobachtungs-Binokular (10c) aufweist.

16. Periskop nach Anspruch 5, allein oder in Kombination mit einem der vorhergehenden Ansprüche,
**dadurch gekennzeichnet,**
daß der Mikromonitor (9) elektronische Steuerungsmittel (9b) aufweist, die geeignet sind, die vom Periskop (1) aufgenommenen Bilder an verschiedene Beobachtungsstationen des gepanzerten Fahrzeugs weiterzuleiten, und diese Informationen zusätzlich auf den Bildschirm (9a) des Mikromonitors (9) anzugeben.

17. Periskop nach Anspruch 7, allein oder in Kombination mit einem der vorhergehenden Ansprüche,
**dadurch gekennzeichnet**,
daß es eine im wesentlichen zylindrische Form hat und oben die Objektive (4,5) der Videokanäle (2,3) aufweist, sowie die Bildempfänger (6,7) und die zugehörigen elektronischen Mittel (8) für die Behandlung der Signale, außerdem die Lichtverstärkerröhre (11) und das Eingangsprisma (10a) des Sicherheitskanals für den Tagbetrieb, und daß das Prisma in seinem unteren Teil die Binokulare (10c) der Videokanäle und des Sicherheitskanals aufweist, das Ausgangs-Tara (10b) des Sicherheitskanals (3) und den Mikromonitor (9), der im wesentlichen vertikal angeordnet ist, während die elektronischen Steuerungsmittel (9b) des Mikromonitors zwischen dem oberen und dem unteren Teil des Periskops angeordnet sind.

18. Periskop nach einem der vorhergehenden Ansprüche,
**dadurch gekennzeichnet,**
daß die optischen Achsen der Videokanäle (2,3) sich in derselben Ebene erstrecken.

19. Periskop nach einem der Ansprüche 1 bis 17,
**dadurch gekennzeichnet,**
daß die beiden optischen Achsen der Videokanäle (2,3) sich in zwei parallelen Ebenen erstrecken.

20. Periskop nach einem der vorhergehenden Ansprüche,
**dadurch gekennzeichnet,**
daß zwei trennbare Module vorgesehen sind, von denen der eine wenigstens die optischen Videokanäle (2,3) und die zugeordneten elektronischen Mittel (8) aufweist, während der andere Modul als Modul zur Sichtbarmachung ausgebildet ist und die optronischen Mittel (9) zur Sichtbarmachung aufweist.

## Claims

1. Driving episcope with day and night observation for armoured vehicles comprising at least two video optronic channels of the type containing a lens (4, 5) that focuses an incident image on a photonic converter type image sensor (6, 7) which is able to transform the above-mentioned image into an electric signal, said episcope also containing electronic means for analyzing, processing and shaping the above-mentioned electric signal which is intended for display means (9), one of said optronic channels being a night channel and the other a day channel, said episcope being characterized in that it also comprises a back-up optical day channel.

2. Episcope according to claim 1, characterised in that the position of use of the back-up optical day channel (10) is angularly offset relative to the position of use of the above-mentioned video channels (2, 3).

3. Episcope according to any one of the preceding claims, characterised in that one of the image sensors (6, 7) is a charge-transfer device (4).

4. Episcope according to one of claims 1 to 3, characterised in that the display means (9) are common (20) to both video channels (2, 3).

5. Episcope according to any one of the preceding claims, characterised in that the display means comprise a display micro-monitor (9) inside the episcope (1) and to which the image sensors (6, 7) of the video channels (2, 3) are linked.

6. Episcope according to claim 5, characterised in that it includes a viewer for observing the screen (9) of a micro-monitor.

7. Episcope according to one of the preceding claims, characterised in that one (2) of the video channels comprises a light intensifier tube (11) interposed between the lens (4) and the corresponding image sensor (6).

8. Episcope according to claim 7, in which one of the image sensors is a charge-transfer device, characterised in that the intensifier tube (11) of the night channel is linked to the corresponding charge-transfer device (6) by an optical fibre beam (12).

9. Episcope according to one of the preceding claims, characterised in that the image sensor (6) of one (2) of the video channels is an infrared sensor.

10. Episcope according to one of the preceding claims, characterised in that the image sensor (7) of one (3) of the channels is a colour sensor.

11. Episcope according to one of the preceding claims, characterised in that only one video channel (2, 3) is in service at any time, changeover from one channel to another being effected by manual switching.

12. Episcope according to one of the preceding claims, characterised in that the electronic processing means (8) of the image sensors (6, 7) are able to ensure automatic changeover from the night channel (2) service position to the day channel (3) service position in the event of the night channel (2) becoming saturated.

13. Episcope according to any one of claims 8 to 13, characterised in that the lenses (4, 5), image sensors (6, 7) and light intensifier tube (11) are mounted on an oscillating plate (20).

14. Episcope according to one of the preceding claims, characterised in that the electronic processing means (8) of the image sensors (6, 7) comprise means for integrating oscillation.

15. Episcope according to one of the preceding claims, characterised in that the back-up day channel (10) comprises an input prism (10a) with a surface reflecting towards an output device (10b) with a surface reflecting towards a viewer (10c).

16. Episcope according to claim 5 taken alone or in combination with one of the preceding claims, characterised in that the micro-monitor (9) comprises electronic command means (9b) which are able to relay the images detected by the episcope (1) to different observation posts in the armoured vehicle and to display information by superimposition on the screen (9a) of the micro-monitor (9).

17. Episcope according to claim 7 taken alone or in combination with one of the preceding claims, characterised in that it presents a generally cylindrical form and comprises, in the upper portion, the lenses (4, 5) of the video channels (2, 3), the image sensors (6, 7) and associated electronic processing means (8), light intensifier tube (11) and the input prism (10a) of the back-up day channel, and in the lower portion the viewers (10c) of the video and back-up channels, the output device (10b) of the back-up channel (3) and the micro-monitor (9) arranged in a substantially vertical position, whereas the electronic command means (9b) of the micro-monitor straddle both the upper and lower parts of the episcope (1).

18. Episcope according to one of the preceding claims, characterised in that the optical axes of the video channels (2, 3) extend in the same plane.

19. Episcope according to any one of claims 1 to 17, characterised in that the optical axes of the video channels (2, 3) extend in two parallel planes.

20. Episcope according to one of the preceding claims, characterised in that it comprises two dissociable modules, one comprising at least the video optronic channels (2, 3) and associated electronic means (8), whereas the other constitutes a display module comprising the optronic display means (9).
